# EUROPEAN PATENT SPECIFICATION

(11) **EP 3 239 001 B1**
(45) Date of publication and mention of the grant of the patent: **26.12.2018**
(21) Application number: 17167257.9
(22) Date of filing: 20.04.2017
(51) Int. Cl.: B60R 9/10, B60R 9/048

(54) **DEVICE FOR TRANSPORTING AT LEAST ONE BICYCLE ON A VEHICLE**
TRANSPORTVORRICHTUNG FÜR MINDESTENS EIN FAHRRAD AUF EIN FAHRZEUG
DISPOSITIF DE TRANSPORT AU MOINS UNE BICYCLE SUR UN VÉHICULE

(30) Priority: 29.04.2016 IT UA20163029
(43) Date of publication of application: 01.11.2017
(73) Proprietor: TD S.p.A., 10121 Torino (TO) (IT)
(72) Inventor: TASCHERO, Giuseppe, 10040 Volvera (TO) (IT)
(74) Representative: Reposio, Giancarlo

(56) References cited:
- WO-A1-02/08019
- DE-A1- 19 934 384
- DE-U1- 20 205 946
- US-A- 4 840 278
- US-A1- 2010 038 389

## Description

The present invention relates to a device for transporting at least one bicycle on a vehicle, in particular on a roof of a vehicle, according to the preamble of claim 1.

The present invention also relates to an associated vehicle, in particular a car, comprising said device.

The invention finds application and is especially useful for transporting a bicycle on the roof of a vehicle, in particular said vehicle being a car; it should be noted that, although reference will be made in the present description to a bicycle, the device according to the present invention can also be used for other similar loads and/or for luggage of different nature.

The devices known in the art usually comprise a support structure adapted to be secured to the body of the vehicle, in particular to the roof of said vehicle; in particular, the support structure typically comprises at least one channel adapted to receive the wheels of a bicycle, said channel being adapted to be associated with at least one pair of bars (also known as "load bars") arranged transversally to the longitudinal development of the vehicle (i.e. orthogonal to the direction of travel of the vehicle).

The devices known in the art also comprise anchoring means for securing or fastening the bicycle to said support structure.

More in detail, the anchoring means usually consist of tubular elements hinged to the support structure and adapted to be coupled, much like a vice, to an element of the frame of the bicycle, in particular after the wheels of the bicycle have been positioned inside said at least one channel.

However, the devices known in the art suffer from a few drawbacks.

One particularly important drawback of prior-art devices is that the frames of modern bicycles have cross-sections that may vary considerably in both shape and size, while each vice formed by the tubular elements hinged to the support structure of the device has fixed dimensions and is intended for transporting a specific type of bicycle.

For this reason, said vice cannot ensure a reliable and adequate retention of bicycle frames of any shape, size and type; as a consequence, the various devices known in the art cannot fulfill the reliability requirements demanded by different bicycle types and different frame shapes and dimensions.

Another drawback of prior-art devices relates to the fact that vehicles are becoming increasingly taller (e.g. those vehicles known as "SUVs"), which makes it more difficult to position the bicycle on the roof of the vehicle, particularly when no elevated means (e.g. a step ladder or a stool) are available for effecting such positioning.

Document US2010038389 discloses a device for transporting at least one bicycle on a vehicle, in particular on the roof of said vehicle according to the preamble of claim 1.

In this frame, it is the main object of the present invention to overcome the drawbacks of prior-art devices for transporting at least one bicycle on a vehicle, in particular on the roof of a vehicle.

In particular, it is one object of the present invention to provide a device for transporting at least one bicycle on a vehicle, in particular on the roof of a vehicle, and an associated vehicle, wherein said at least one bicycle can be anchored in a reliable and adequate manner regardless of the shape, dimensions and type of its frame.

It is a further object of the present invention to provide a device for transporting at least one bicycle on a vehicle, and an associated vehicle, realized in such a way to be versatile and capable of fulfilling the requirements of adaptability of one device to different types of bicycles and different frame shapes and sizes, i.e. capable of adequately coupling to a component of the frame of said bicycle regardless of variable frame cross-sections, shapes and dimensions.

As a consequence, it is one object of the present invention to provide a device for transporting at least one bicycle on a vehicle that will not require a user to replace the device with a different one according to the type of bicycle to be transported.

It is another object of the present invention to provide a device for transporting at least one bicycle on a vehicle which facilitates the positioning of the bicycle on the roof and which allows locking the bicycle by operating the device from the ground, in particular without necessarily requiring the use of elevated means (e.g. a step ladder or a stool).

It is a further object of the present invention to provide a device for transporting at least one bicycle on a vehicle which is so conceived as to cut down the production costs without however jeopardizing the reliability thereof and the ease of installation thereof on a vehicle.

Said objects are achieved by the present invention through a device for transporting at least one bicycle on a vehicle, in particular on the roof of a vehicle, and an associated vehicle, incorporating the features set out in the appended claims, which are an integral part of the present description.

Further objects, features and advantages of the present invention will become apparent in the light of the following detailed description and of the annexed drawings, which are supplied merely by way of non-limiting example, wherein:
- Figures 1a and 1b are, respectively, a side view and a front view of a device for transporting at least one bicycle on a vehicle and of a portion of an associated vehicle in accordance with the present invention, wherein the device is in an idle or non-operating position;
- Figures 2a and 2b are, respectively, a side view and a front view of the device and of a portion of the vehicle in accordance with the present invention, wherein the device is in a raised or operating position;
- Figures 3a and 3b are magnified views of a first detail A and a second detail B of Fig. 2b;
- Figures 3c and 3d are perspective views of a component of the device according to the present invention, such component being shown in a first operating condition (Fig. 3c) and a second operating condition (Fig. 3d);
- Figures 4a and 4b are, respectively, a side view and a front view of the device and of a portion of the vehicle, showing a bicycle locked by the device according to the present invention.

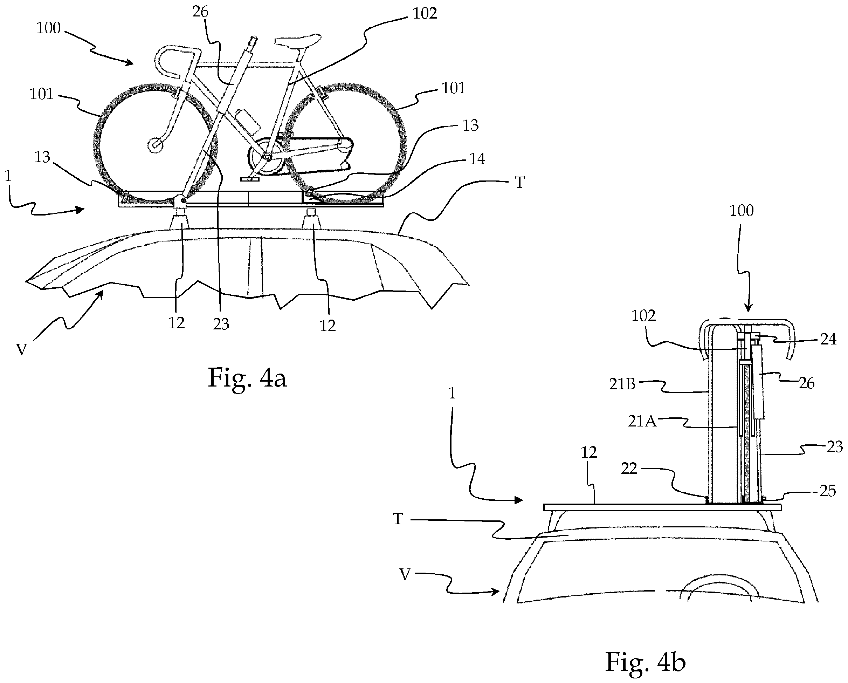

Referring now to the annexed drawings, reference numeral 1 represents as a whole a device for transporting at least one bicycle 100 (visible in Figures 4a and 4b) on a vehicle V.

In particular, as can be seen in the annexed drawings, said device 1 is of the type that allows transporting at least one bicycle 100 on the roof T of a vehicle V, and the vehicle V is preferably a car.

As previously explained, reference is made in the present description to a bicycle 100, but the device 1 according to the present invention can also be used for other similar loads and/or for luggage of different nature.

The device 1 according to the present invention comprises a support structure 10 adapted to be secured to the body of the vehicle V, in particular to the roof T of said vehicle V.

In particular, the support structure 10 comprises at least one channel 11 adapted to receive the wheels 101 of said bicycle 100; it is clear that said at least one channel 11 may also comprise a pair of channels 11, wherein each channel 11 is adapted to receive a respective wheel 101 of said bicycle 100.

Preferably, said at least one channel 11 is secured to the roof T of the vehicle V in such a way as to be arranged parallel to the longitudinal development of the vehicle V, i.e. parallel to the direction of travel of the vehicle V.

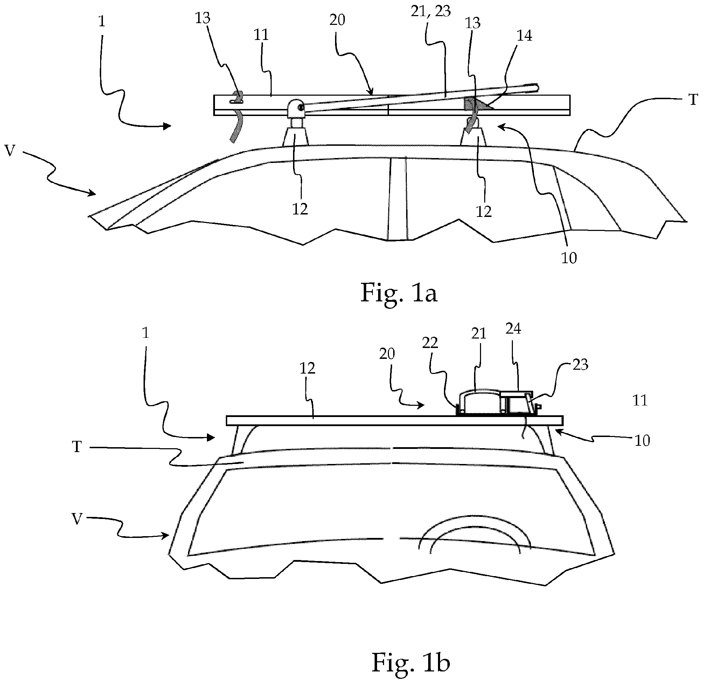

Furthermore, said at least one channel 11 is substantially L-shaped in a cross-sectional view of said channel 11 (i.e. in a cross-sectional view orthogonal to the longitudinal development of the channel 11) and/or in a front view of the vehicle V (i.e. in a view like those shown in Figures 1b, 2b, 3b and 4b); such a conformation of the channel 11 facilitates the positioning of the bicycle 100 on the roof T of the vehicle V, since the L-shaped channel 11 will not require the user to lift the bicycle 100 much higher than the level at which said bicycle 100 will have to be anchored.

As a result, the realization of the channel 11 according to the present invention makes it easier to position the bicycle 100 on the roof T of the vehicle V and to lock the bicycle 100 by operating the device from the ground, in particular without necessarily requiring the use of elevated means (e.g. a step ladder o a stool).

In addition, the device 1 preferably comprises retaining means 13, 14 for retaining the wheels 101 of said bicycle 100 relative to said channel 11.

In the embodiment shown in the annexed drawings, said retaining means may comprise at least one band 13 associated with the channel 11 for securing the wheels 101 of said bicycle 100 to said channel 11. In addition or as an alternative, said retaining means may comprise at least one wedge 14 associated with the channel 11 for retaining at least one of said wheels 101 and preventing it from moving forwards.

Preferably, the support structure 10 comprises at least one pair of bars 12 secured to the body of the vehicle V, in particular to the roof T of said vehicle V, and arranged orthogonally relative to the longitudinal development of the vehicle V (i.e. orthogonally to the direction of travel of the vehicle V), said at least one channel 11 being associated (whether directly or indirectly) to said pair of bars 12. It should be noted that said bars 12 are also commonly defined as "load bars"; it is however clear that the support structure 10 according to the present invention may also comprise elements that are different from typical "load bars", since what is important is that said elements are such as to allow said at least one channel 11 to be coupled and/or secured to the body of the vehicle V, in particular to the roof T of said vehicle V.

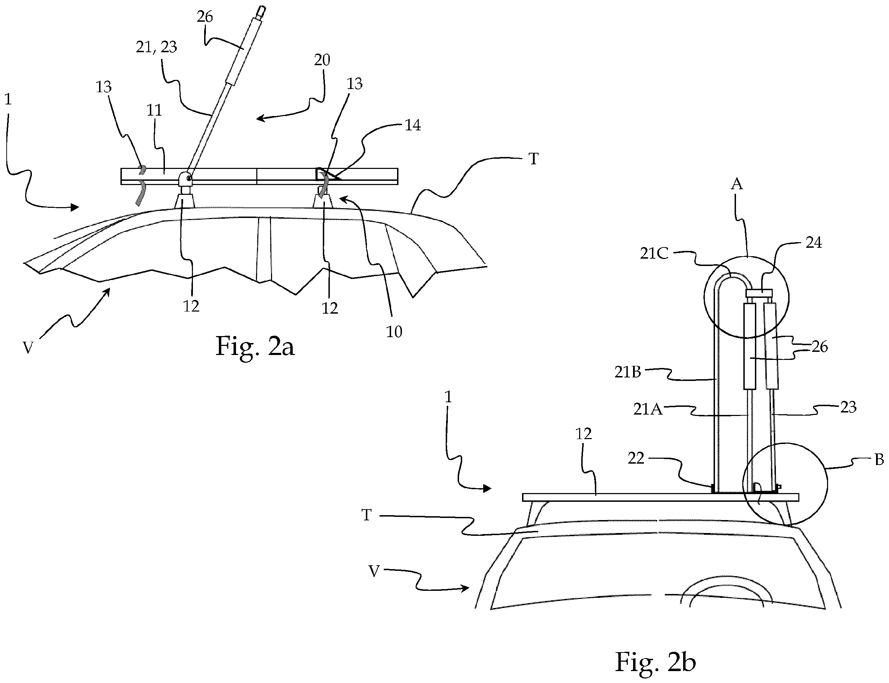

The device 1 according to the present invention further comprises anchoring means (designated as a whole by reference numeral 20 in the annexed Figures 1a, 1b and 2a) for securing the bicycle 100 to said support structure 10, wherein said anchoring means 20 comprise a first post 21 with at least one end hinged to a base 22 associated with the support structure 10. It must be pointed out that said base 22 may without distinction be fastened to (or made as one piece with) the channel 11 and/or a bar 12 and/or an additional component (not shown) of the support structure 10.

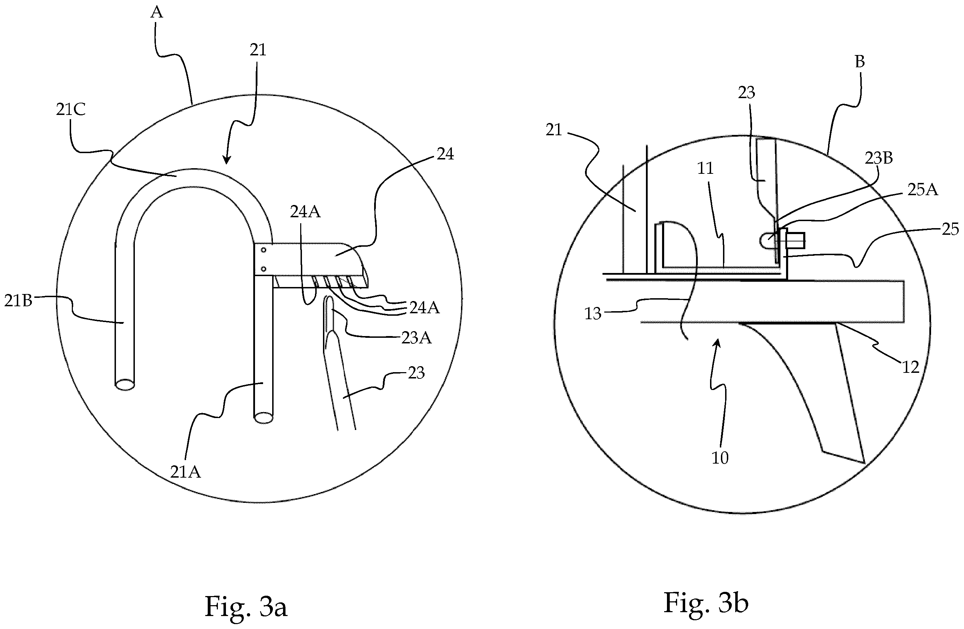

In accordance with the present invention, said anchoring means 20 comprise a second post 23 provided with a first terminal tract 23A and a second terminal tract 23B, wherein the second terminal tract 23B is hingedly coupled to the support structure 10, in particular by means of a bracket 25 associated with said support structure 10, and wherein said second post 23 is associated with the first post 21 through a coupling member 24 having a plurality of housings 24A adapted to receive the first terminal tract 23A of the second post 23 (as shown in the magnified view of Fig. 3a concerning the first detail A of Fig. 2a), so that the distance between the second post 23 and the first post 21 can be varied to adapt said distance to the dimensions of the bicycle 100 to be transported.

As can be seen in Fig. 3a, said coupling member 24 preferably consists of an arm, and said plurality of housings 24A consists of a plurality of slots formed in at least a portion of said arm facing the support structure 10, wherein each slot is adapted to receive the first terminal tract 23A, which has a flat shape; it is however clear that the coupling member 24 and/or the plurality of housings 24A may be replaced with other technically equivalent elements.

It should also be noted that the coupling member 24 is fastened to the first post 21 via fastening means known in the art; however, said coupling member 24 may also be made as one piece with the first post 21.

From the above description it emerges clearly that the first post 21 and the second post 23 are associated with each other in such a way as to remain variably spaced apart in a direction orthogonal to the direction of travel of the vehicle V, i.e. a direction orthogonal to the longitudinal development of said vehicle V.

As a consequence, it is clear that the device 1 according to the present invention allows fulfilling the requirements of adaptability of a same device 1 to different types of bicycles 100 and different shapes and dimensions of the frame 102.

In fact, the provision of the coupling member 24 and the fact that it has a plurality of housings 24A allow the first post 21 and the second post 23 to be adequately spaced apart; consequently, it is clear that the device 1 according to the present invention is realized for properly coupling to the frame 102 of said bicycle 100 independently of the different cross-sections of the frames 102 of different bicycles 100, which may vary considerably in shape and size.

It is therefore apparent that the device 1 according to the present invention is so conceived as to not require a user to replace the device 1 with a different one according to the type of bicycle 100 to be transported.

In accordance with the present invention, the second terminal tract 23B of the second post 23 (see the magnified view of Fig. 3b, concerning the second detail B of Fig. 2b) is hingedly coupled to a bracket 25 associated with the support structure 10 by means of a pin 25A (shown in the magnified view of Fig. 3b) lying in a transversal direction relative to the direction of travel (i.e. the longitudinal development) of the vehicle V.

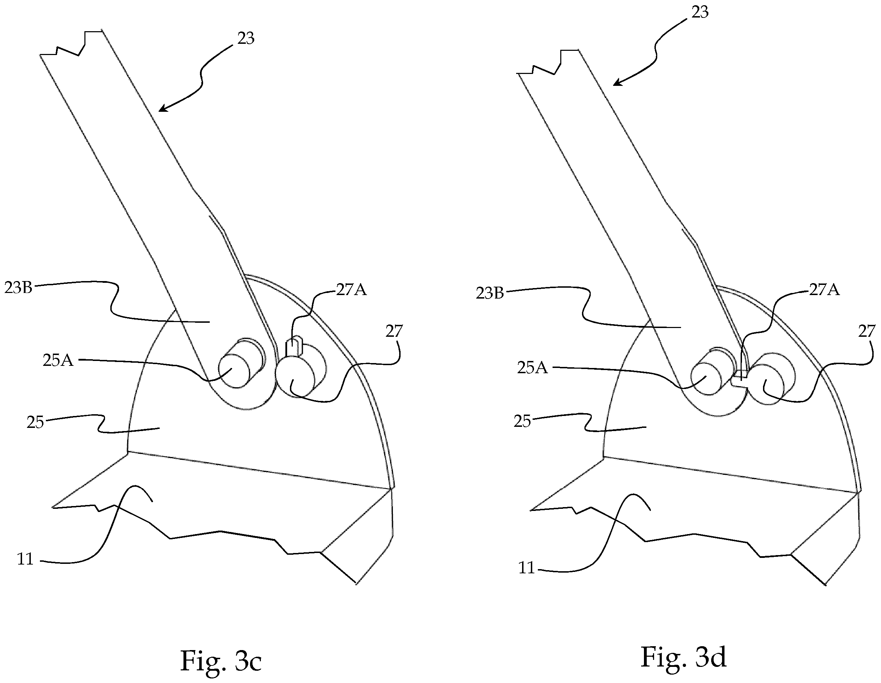

Figures 3c and 3d show detailed perspective views of the inner portion of the bracket 25, i.e. that portion of the bracket 25 which faces towards the channel 11. In these figures, one can notice the coupling between the second terminal tract 23B of the second post 23 and the pin 25A of the bracket 25.

Also, in these figures one can notice that the device 1 according to the present invention comprises a lock 27 associated with the bracket 25, said lock 27 comprising at least one tooth 27A adapted to switch:
- from a first operating condition (Fig. 3c), wherein said tooth 27A is so positioned as to allow the second terminal tract 23B of the second post 23 to be coupled to and decoupled from the pin 25A;
- to a second operating condition (Fig. 3d), wherein said tooth 27A is so positioned as to prevent the second terminal tract 23B of the second post 23 from being released from the pin 25A, and vice versa (i.e. the tooth 27A is adapted to switch from the second operating condition of Fig. 3d to the first operating condition of Fig. 3c).

It is however clear that the coupling between the second terminal tract 23B of the second post 23 and the pin 25A of the bracket 25 may also be effected otherwise or in a different way; merely by way of example, such coupling may also be effected on an external portion of the bracket 25, i.e. on a portion of the bracket 25 facing towards a side opposite to the side facing towards the channel 11.

Said bracket 25 is associated with the support structure 10 on the opposite side of the channel 11 with respect to the base 22 whereto the first post 21 is hinged. As a consequence, the channel 11 is interposed between the base 22 of the first post 21 and the bracket 25 of the second post 23; in such an embodiment, the coupling member 24 is substantially positioned at the vertical of the channel 11, in particular said coupling member 24 lying along a straight line perpendicular to the vertical of the channel 11.

Just like the base 22, also the bracket 25 can be fastened to (or made as one piece with) the channel 11 and/or a bar 12 and/or an additional component (not shown) of the support structure 10.

In a preferred embodiment, the first post 21 is U-shaped and comprises a straight first tract 21A, a straight second tract 21B, and a third tract 21C that acts as a junction between the first tract 21A and the second tract 21B, wherein the free ends of said first tract 21A and second tract 21B are both hingedly associated with said base 22.

In particular, the free ends of said first tract 21A and second tract 21B are hinged to the base 22 by means of pivot pins (not shown) lying in a transversal direction relative to the direction of travel (i.e. the longitudinal development) of the vehicle V.

It should be noted that the "U" shape of the first post 21 makes that component more stable; however, it is clear that, in accordance with the present invention, the first post 21 may also be realized otherwise.

In such an embodiment, the coupling member 24 is positioned on the first tract 21A of the first post 21, in particular on a portion of said first tract 21A proximal to the connecting third tract 21C.

By comparing Figures 1a and 1b with Figures 2a and 2b, one can notice that the first post 21 and the second post 23 are hingedly coupled to the support structure 10; in substance, this means that the first post 21 and the second post 23 can oscillate between an idle position (as shown in Figures 1a and 1b), in which the first post 21 and the second post 23 substantially lie down on the support structure 10 (in particular on the channel 11), and various raised positions at different angles (one of which is visible in Figures 2a, 2b, 4a and 4b).

When the first post 21 consists of a substantially straight bar, the coupling member 24 is preferably positioned in proximity to one end of said bar, in particular the end opposite to the one hingedly coupled to the support structure 10.

In a preferred embodiment, the first post 21 and/or the second post 23 comprise a portion coated with an elastic material 26 for effecting a coupling with the bicycle 100, in particular with the frame 102 of said bicycle, without any risk of damage to said bicycle 100. In particular, the first tract 21A of the first post 21 comprises a portion coated with said elastic material 26.

The operation of the device 1 according to the present invention can be understood in the light of the above description.

In particular, in order to position and lock the bicycle 100 on the roof T of the vehicle V, the user will have to carry out the following steps:
a) lifting the bicycle 100 to a level where the wheels 101 can be made to rest on at least one channel 11, in particular said channel 11 being substantially L-shaped and the wheels 101 resting on the horizontal tract of said L-shaped channel 11;
b) leaning the bicycle 100 against the first post 21;
c) coupling the first terminal tract 23A of the second post 23 to a housing 24A of the coupling member 24 associated with the first post 21;
d) hingedly coupling the second terminal tract 23B of the second post 23 to the support structure 10, in particular said second terminal tract 23B being hingedly coupled to a bracket 25 associated with the support structure 10 by means of a pin 25A lying in a transversal direction relative to the direction of travel (i.e. the longitudinal development) of the vehicle V.

On the contrary, in order to unload the bicycle 100 from the roof T of the vehicle V, the user will have to proceed in the reverse order by carrying out the following steps:
- decoupling the second terminal tract 23B of the second post 23 from the support structure 10 and/or from the bracket 25,
- decoupling the first terminal tract 23A of the second post 23 from the housing 24A,
- moving the bicycle 100 away from the first post 21, and
- supporting the bicycle 100 and laying it on the ground.

It is therefore clear that the provisions of the present invention are useful for both facilitating the positioning of the bicycle 100 on the roof T of the vehicle V and locking the bicycle 100 by operating the device 1 from the ground, in particular without necessarily requiring the use of elevated means (e.g. a step ladder or a stool).

In fact, positioning the wheels 101 on the channel 11 is easier because the "L" shape (as opposed to the "U" or "V" shapes of prior-art channels) makes it unnecessary for the user to raise the bicycle 100 excessively; furthermore, in order to lock the bicycle 100 the user will only have to reach a height corresponding to the level of the bracket 25, i.e. substantially the same level as the support structure 10 secured to the roof T of the vehicle V.

It should be noted that step c) is carried out by choosing a housing 24A suitable for the dimensions of the bicycle 100 to be transported, the coupling member 24 comprising a plurality of housings 24A so realized as to allow adjusting the distance between the second post 23 and the first post 21, so that bicycles 100 of different types and dimensions can be properly anchored.

Moreover, step a) may be preceded by a step a1) of bringing the first post 21 and the second post 23 from a position in which they substantially lie on the support structure 10 (in particular on the channel 11) to a raised or operating position.

In addition, positioning and locking the bicycle 100 on the roof T of the vehicle V may comprise a step e) of securing the wheels 101 of said bicycle 100 to the channel 11 by means of at least one band 13 associated with said channel 11 and/or preventing at least one of said wheels 101 from moving forwards by means of at least one wedge 14 associated with the channel 11. In such a case, in order to unload the bicycle 100 from the roof T of the vehicle V, the user will first have to unlock the wheels 101 by releasing said at least one band 13 from said wheels 101.

The advantages of a device 1 for transporting at least one bicycle 100 on a vehicle V, in particular on a roof T of a vehicle V, according to the present invention are apparent from the above description.

Such advantages are due to the fact that the provisions of the present invention allow realizing the device 1 in such a way as to fulfill the requirements of adaptability of one device 1 to different types of bicycles 100 and different shapes and dimensions of the frame 102.

In fact, the provision of the coupling member 24 and the fact that it has a plurality of housings 24A allow the first post 21 and the second post 23 to be adequately spaced apart; consequently, it is clear that the device 1 according to the present invention is realized for properly coupling to the frame 102 of said bicycle 100 independently of the different cross-sections of the frames 102 of different bicycles 100, which may vary considerably in shape and size.

It is therefore also apparent that the device 1 according to the present invention is so conceived as to not require a user to replace the device 1 with a different one according to the type of bicycle 100 to be transported.

Furthermore, the provisions of the present invention are useful for both facilitating the positioning of the bicycle 100 on the roof T of the vehicle V and locking the bicycle 100 by operating the device 1 from the ground, in particular without necessarily requiring the use of elevated means (e.g. a step ladder or a stool).

In fact, positioning the wheels 101 on the channel 11 is easier because the "L" shape (as opposed to the "U" or "V" shapes of prior-art channels) does not require the user to excessively lift the bicycle 100.

In addition, the coupling of the second post 23 with a housing 24A of the coupling member 24 and with the support structure 10, in particular by means of the bracket 25, can be easily effected by the user from the ground, in particular without requiring the use of elevated means, since the user will only have to reach a height corresponding to the level of the support structure 10 or bracket 25.

## Claims

1. Device (1) for transporting at least one bicycle (100) on a vehicle (V), in particular on the roof (T) of said vehicle (V), comprising:
- a support structure (10) adapted to be secured to the body of the vehicle (V), in particular to the roof (T) of said vehicle (V), said structure (10) comprising at least one channel (11) adapted to receive the wheels (101) of said bicycle (100);
- anchoring means (20) that secure the bicycle (100) to said support structure (10), said anchoring means (20) comprising a first post (21) with at least one end hinged to a base (22) associated with the support structure (10),
**characterized in that**
said anchoring means (20) comprise a second post (23) provided with a first terminal tract (23A) and a second terminal tract (23B),
wherein the second terminal tract (23B) is hingedly coupled to the support structure (10), in particular by means of a bracket (25) associated with said support structure (10),
and wherein said second post (23) is associated with the first post (21) through a coupling member (24) having a plurality of housings (24A) adapted to receive the first terminal tract (23A) of the second post (23), so that the distance between the second post (23) and the first post (21) can be varied to adapt said distance to the dimensions of the bicycle (100) to be transported.

2. Device (1) according to claim 1, **characterized in that** said coupling member (24) preferably consists of an arm, and said plurality of housings (24A) consists of a plurality of slots formed in at least a portion of said bracket facing the support structure (10), wherein each slot is adapted to receive the first terminal tract (23A) of the second post (23), in particular said first terminal tract (23A) having a flat shape.

3. Device (1) according to one or more of the preceding claims, **characterized in that** said second terminal tract (23B) is hingedly coupled to a bracket (25) associated with the support structure (10) by means of a pin (25A) lying in a transversal direction relative to the direction of travel of the vehicle (V).

4. Device (1) according to claim 3, **characterized in that** it comprises a lock (27) associated with the bracket (25), said lock (27) comprising at least one tooth (27A) adapted to switch:
- from a first operating condition, wherein said tooth (27A) is so positioned as to allow the second terminal tract (23B) of the second post (23) to be coupled to and decoupled from the pin (25A);
- to a second operating condition, wherein said tooth (27A) is so positioned as to prevent the second terminal tract (23B) of the second post (23) from being released from the pin (25A), and vice versa.

5. Device (1) according to one or more of claims 3 and 4, **characterized in that** said bracket (25) is associated with the support structure (10) on the opposite side of the channel (11) with respect to the base (22) whereto the first post (21) is hinged.

6. Device (1) according to one or more of the preceding claims, **characterized in that** the first post (21) is U-shaped and comprises a straight first tract (21A), a straight second tract (21B), and a third tract (21C) that acts as a junction between the first tract (21A) and the second tract (21B), wherein the free ends of said first tract (21A) and second tract (21B) are both hingedly associated with said base (22).

7. Device (1) according to claim 6, **characterized in that** said free ends of said first tract (21A) and second tract (21B) are hinged to the base (22) by means of pivot pins lying in a transversal direction relative to the direction of travel of the vehicle (V).

8. Device (1) according to one or more of claims 6 and 7, **characterized in that** the coupling member (24) is positioned on the first tract (21A) of the first post (21), in particular on a portion of said first tract (21A) proximal to the connecting third tract (21C).

9. Device (1) according to one or more of the preceding claims, **characterized in that** the first post (21) and/or the second post (23) comprise a portion coated with an elastic material (26) for effecting a coupling with the bicycle (100).

10. Device (1) according to one or more of the preceding claims, **characterized in that** said support structure (10) comprises at least one pair of bars (12) secured to the body of the vehicle (V), in particular to the roof (T) of said vehicle (V), and arranged orthogonally relative to the longitudinal development of the vehicle (V), said at least one channel (11) being associated with said pair of bars (12).

11. Device (1) according to one or more of the preceding claims, **characterized in that** said at least one channel (11) is substantially L-shaped in a cross-sectional view of said channel (11) and/or in a front view of the vehicle (V).

12. Device (1) according to one or more of the preceding claims, **characterized in that** it comprises retaining means (13, 14) for retaining the wheels (101) of said bicycle (100) relative to said channel (11).

13. Device (1) according to claim 12, **characterized in that** said retaining means comprise at least one band (13) associated with the channel (11) for securing the wheels (101) of said bicycle (100) to said channel (11).

14. Device (1) according to one or more of claims 12 and 13, **characterized in that** said retaining means comprise at least one wedge (14) associated with the channel (11) for preventing at least one of said wheels (101) from moving forwards.

15. Vehicle (V) comprising a device (1) for transporting at least one bicycle (100) according to one or more of the preceding claims 1 to 14.

## Patentansprüche

1. Vorrichtung (1) zum Transportieren mindestens eines Fahrrads (100) auf einem Fahrzeug (V), insbesondere auf einem Dach (T) des Fahrzeugs (V), umfassend:
- eine Stützstruktur (10), die eingerichtet ist, am Körper des Fahrzeugs (V), insbesondere am Dach (T) des Fahrzeugs (V), gesichert zu werden, wobei die Struktur (10) mindestens einen Kanal (11) umfasst, der angepasst ist, die Räder (101) des Fahrrads (100) aufzunehmen;
- Verankerungsmittel (20), die das Fahrrad (100) an der Stützstruktur (10) sichern, wobei die Verankerungsmittel (20) einen ersten Pfosten (21) mit mindestens einem Ende umfassen, das an einer Basis (22) angelenkt ist, die mit der Stützstruktur (10) verbunden ist,
**dadurch gekennzeichnet, dass**
die Verankerungsmittel (20) einen zweiten Pfosten (23) umfassen, der mit einem ersten Anschlussteil (23A) und einem zweiten Anschlussteil (23B) bereitgestellt ist, wobei der zweite Anschlussteil (23B) gelenkig mit der Stützstruktur (10) gekoppelt ist, insbesondere mittels einer Klammer (25), die mit der Stützstruktur (10) verbunden ist,
und wobei der zweite Pfosten (23) mit dem ersten Pfosten (21) durch ein Kupplungselement (24) verbunden ist, das mehrere Gehäuse (24A) aufweist, die angepasst sind, das erste Anschlussteil (23A) des zweiten Pfostens (23) aufzunehmen, sodass der Abstand zwischen dem zweiten Pfosten (23) und dem ersten Pfosten (21) variiert werden kann, um den Abstand an die Abmessungen des zu transportierenden Fahrrads (100) anzupassen.

2. Vorrichtung (1) nach Anspruch 1, **dadurch gekennzeichnet, dass** das Kupplungselement (24) vorzugsweise aus einem Arm und die mehreren Gehäuse (24A) aus mehreren Schlitzen bestehen, die in mindestens einem Teil der Klammer (25) gebildet sind, die der Stützstruktur (10) zugewandt ist, wobei jeder Schlitz angepasst ist, um den ersten Anschlussteil (23A) des zweiten Pfostens (23) aufzunehmen, wobei das Anschlussteil (23A) insbesondere eine flache Form hat.

3. Vorrichtung (1) nach einem oder mehreren der vorhergehenden Ansprüche, **dadurch gekennzeichnet, dass** der zweite Anschlussteil (23B) gelenkig mit einer Klammer (25) gekoppelt ist, die mit der Stützstruktur (10) mittels eines Stifts (25A) verbunden ist, der in Querrichtung relativ zur Fahrtrichtung des Fahrzeugs (V) liegt.

4. Vorrichtung (1) nach Anspruch 3, **dadurch gekennzeichnet, dass** sie eine Verriegelung (27) aufweist, die mit der Klammer (25) verbunden ist, wobei die Verriegelung (27) mindestens einen Zahn (27A) umfasst, der angepasst ist zu Schalten:
- von einer ersten Betriebsbedingung, in der der Zahn (27A) so positioniert ist, um dem zweiten Anschlussteil (23B) des zweiten Pfostens (23) zu erlauben, mit dem Stift (25A) gekoppelt und von dem Stift (25A) entkoppelt zu werden;
- in eine zweite Betriebsbedingung, in der der Zahn (27A) so positioniert ist, um zu verhindern, dass sich der zweite Anschlussteil (23B) des zweiten Pfostens (23) vom Stift (25A) löst, und umgekehrt.

5. Vorrichtung (1) nach einem oder mehreren der Ansprüche 3 und 4, **dadurch gekennzeichnet, dass** die Klammer (25) mit der Stützstruktur (10) auf dem gegenüberliegenden Ende des Kanals (11) in Bezug zur Basis (22), an der der erste Pfosten (21) angelenkt ist, verbunden ist.

6. Vorrichtung (1) nach einem oder mehreren der vorhergehenden Ansprüche, **dadurch gekennzeichnet, dass** der Pfosten (21) eine U-Form aufweist und einen geraden ersten Teil (21A), einen geraden zweiten Teil (21B) und einen dritten Teil (21C), der als Anbindung zwischen dem ersten Teil (21A) und dem zweiten Teil (21B) dient, umfasst, wobei die freien Enden des ersten Teils (21A) und zweiten Teils (21B) beide mit der Basis (22) gelenkig verbunden sind.

7. Vorrichtung (1) nach Anspruch 6, **dadurch gekennzeichnet, dass** die freien Enden des ersten Teils (21A) und zweiten Teils (21B) an der Basis (22) mittels Drehzapfen angelenkt sind, die in Querrichtung relativ zur Fahrrichtung des Fahrzeugs (V) liegen.

8. Vorrichtung (1) nach einem oder mehreren der Ansprüche 6 und 7, **dadurch gekennzeichnet, dass** das Kupplungselement (24) auf dem ersten Teil (21A) des ersten Pfostens (21) positioniert ist, insbesondere auf einem Bereich des ersten Teils (21A), der nahe des verbindenden dritten Teils (21C) ist.

9. Vorrichtung (1) nach einem oder mehreren der vorhergehenden Ansprüche, **dadurch gekennzeichnet, dass** der erste Pfosten (21) und/oder der zweite Pfosten (23) mit einem elastischen Material (26) zum Herbeiführen einer Kopplung mit dem Fahrrad (100) beschichtet sind.

10. Vorrichtung (1) nach einem oder mehreren der vorhergehenden Ansprüche, **dadurch gekennzeichnet, dass** die Stützstruktur (10) mindestens ein Paar von Stäben (12) umfasst, die am Körper des Fahrzeugs (V), insbesondere am Dach (T) des Fahrzeugs (V), befestigt sind und rechtwinklig relativ zur Längsausbildung des Fahrzeugs (V) angeordnet sind, wobei mindestens ein Kanal (11) mit dem Paar Stäben (12) verbunden ist.

11. Vorrichtung (1) nach einem oder mehreren der vorhergehenden Ansprüche, **dadurch gekennzeichnet, dass** mindestens ein Kanal (11) im Wesentlichen L-förmig in Querschnittsansicht des Kanals (11) und/oder in Frontansicht des Fahrzeugs (V) ist.

12. Vorrichtung (1) nach einem oder mehreren der vorhergehenden Ansprüche, **dadurch gekennzeichnet, dass** sie Haltemittel (13, 14) zum Halten der Räder (101) des Fahrrads (100) relativ zum Kanal (11) umfasst.

13. Vorrichtung (1) nach Anspruch 12, **dadurch gekennzeichnet, dass** die Haltemittel mindestens ein Band (13) umfassen, das mit dem Kanal (11) verbunden ist, um die Räder (101) des Fahrrads (100) an dem Kanal (11) zu sichern.

14. Vorrichtung (1) nach einem oder mehreren der Ansprüche 12 und 13, **dadurch gekennzeichnet, dass** die Haltemittel mindestens einen Keil (14) umfassen, der mit dem Kanal (11) verbunden ist, um zu verhindern, dass sich mindestens eines der Räder (101) vorwärts bewegt.

15. Fahrzeug (V) umfassend eine Vorrichtung (1) zum Transportieren mindestens eines Fahrrads (100) nach einem oder mehreren der vorhergehenden Ansprüche 1 bis 14.

## Revendications

1. Dispositif (1) pour transporter au moins une bicyclette (100) sur un véhicule (V), en particulier sur le toit (T) dudit véhicule (V), comprenant :
- une structure de support (10) adaptée pour être arrimée à la carrosserie du véhicule (V), en particulier au toit (T) dudit véhicule (V), ladite structure (10) comprenant au moins une gorge (11) adaptée pour recevoir les roues (101) de ladite bicyclette (100) ;
- des moyens d'ancrage (20) qui arriment la bicyclette (100) à ladite structure de support (10), lesdits moyens d'ancrage (20) comprenant un premier montant (21) avec au moins une extrémité articulée à une base (22) associée à la structure de support (10),
**caractérisé en ce que**
lesdits moyens d'ancrage (20) comprennent un second montant (23) pourvu d'un premier appareil terminal (23A) et d'un second appareil terminal (23B),
dans lequel le second appareil terminal (23B) est accouplé de façon articulée à la structure de support (10), en particulier au moyen d'une console (25) associée à ladite structure de support (10),
et dans lequel ledit second montant (23) est associé au premier montant (21) par le biais d'un organe d'accouplement (24) ayant une pluralité de logements (24A) adaptés pour recevoir le premier appareil terminal (23A) du second montant (23), de sorte que la distance entre le second montant (23) et le premier montant (21) puisse être variée pour adapter ladite distance aux dimensions de la bicyclette (100) à transporter.

2. Dispositif (1) selon la revendication 1, **caractérisé en ce que** ledit organe d'accouplement (24) consiste de préférence en un bras, et ladite pluralité de logements (24A) consiste en une pluralité de fentes formées dans au moins une portion de ladite console en regard de la structure de support (10), dans lequel chaque fente est adaptée pour recevoir le premier appareil terminal (23A) du second montant (23), en particulier ledit premier appareil terminal (23A) ayant une forme plate.

3. Dispositif (1) selon l'une ou plusieurs des revendications précédentes, **caractérisé en ce que** ledit second appareil terminal (23B) est accouplé de façon articulée à une console (25) associée à la structure de support (10) au moyen d'une broche (25A) se trouvant dans une direction transversale par rapport à la direction de déplacement du véhicule (V).

4. Dispositif (1) selon la revendication 3, **caractérisé en ce qu'**il comprend un verrou (27) associé à la console (25), ledit verrou (27) comprenant au moins une dent (27A) adaptée pour passer :
- d'un premier état de fonctionnement, dans lequel ladite dent (27A) est positionnée de façon à permettre d'accoupler et de désaccoupler le second appareil terminal (23B) du second montant (23) à et de la broche (25A) ;
- à un second état de fonctionnement, dans lequel ladite dent (27A) est positionnée de façon à empêcher le second appareil terminal (23B) du second montant (23) d'être libéré de la broche (25A), et vice versa.

5. Dispositif (1) selon l'une ou plusieurs des revendications 3 et 4, **caractérisé en ce que** ladite console (25) est associée à la structure de support (10) sur le côté opposé de la gorge (11) par rapport à la base (22) à laquelle le premier montant (21) est articulé.

6. Dispositif (1) selon l'une ou plusieurs des revendications précédentes, **caractérisé en ce que** le premier montant (21) est en forme de U et comprend un premier appareil droit (21A), un deuxième appareil droit (21B), et un troisième appareil (21C) qui sert de jonction entre le premier appareil (21A) et le deuxième appareil (21B), dans lequel les extrémités libres desdits premier appareil (21A) et deuxième appareil (21B) sont toutes deux associées de façon articulée à ladite base (22).

7. Dispositif (1) selon la revendication 6, **caractérisé en ce que** lesdites extrémités libres desdits premier appareil (21A) et deuxième appareil (21B) sont articulées à la base (22) au moyen de broches pivotantes se trouvant dans une direction transversale par rapport à la direction de déplacement du véhicule (V).

8. Dispositif (1) selon l'une ou plusieurs des revendications 6 et 7, **caractérisé en ce que** l'organe d'accouplement (24) est positionné sur le premier appareil (21A) du premier montant (21), en particulier sur une portion dudit premier appareil (21A) proximale au troisième appareil de raccordement (21C).

9. Dispositif (1) selon l'une ou plusieurs des revendications précédentes, **caractérisé en ce que** le premier montant (21) et/ou le second montant (23) comprennent une position revêtue d'un matériau élastique (26) pour effectuer un accouplement avec la bicyclette (100).

10. Dispositif (1) selon l'une ou plusieurs des revendications précédentes, **caractérisé en ce que** ladite structure de support (10) comprend au moins une paire de barres (12) arrimées à la carrosserie du véhicule (V), en particulier au toit (T) dudit véhicule (V), et agencées orthogonalement par rapport au développement longitudinal du véhicule (V), ladite au moins une gorge (11) étant associée à ladite paire de barres (12).

11. Dispositif (1) selon l'une ou plusieurs des revendications précédentes, **caractérisé en ce que** ladite au moins une gorge (11) est sensiblement en forme de L dans une vue en coupe de ladite gorge (11) et/ou dans une vue de face du véhicule (V).

12. Dispositif (1) selon l'une ou plusieurs des revendications précédentes, **caractérisé en ce qu'**il comprend des moyens de retenue (13, 14) pour retenir les roues (101) de ladite bicyclette (100) par rapport à ladite gorge (11).

13. Dispositif (1) selon la revendication 12, **caractérisé en ce que** lesdits moyens de retenue comprennent au moins une bande (13) associée à la gorge (11) pour arrimer les roues (101) de ladite bicyclette (100) à ladite gorge (11).

14. Dispositif (1) selon l'une ou plusieurs des revendications 12 et 13, **caractérisé en ce que** lesdits moyens de retenue comprennent au moins une cale (14) associée à la gorge (11) pour empêcher au moins l'une desdites roues (101) d'avancer.

15. Véhicule (V) comprenant un dispositif (1) pour transporter au moins une bicyclette (100) selon l'une ou plusieurs des revendications 1 à 14 précédentes.
